# EUROPÄISCHE PATENTANMELDUNG

(11) **EP 4 844 252 A1**
(43) Veröffentlichungstag der Anmeldung: **25.11.2026**
(21) Anmeldenummer: 26179634.6
(22) Anmeldetag: 19.05.2026
(51) Int. Cl.: F16L 23/16, F16L 55/07, F16L 55/175

(54) **LEITUNGSMANSCHETTE, VERWERTUNGSSYSTEM, LEITUNGSSYSTEM UND VERFAHREN**

(30) Priorität: 20.05.2025 DE 102025119435
(71) Anmelder: Westnetz GmbH, 44139 Dortmund (DE)
(72) Erfinder: Ewering, Dietmar, 48565 Steinfurt (DE); Penczek, Torben, 45772 Marl (DE)
(74) Vertreter: Bals & Vogel Patentanwälte PartGmbB

(57) **Zusammenfassung**

Die Erfindung betrifft eine Leitungsmanschette (10) zur vollumfänglichen Umfassung eines Rohrleitungsabschnitts (61.1) einer, insbesondere fluidführenden, Rohrleitung (61), umfassend einen Gehäusekörper (11), wobei der Gehäusekörper (11) einen Hohlraum (12) zur, zumindest temporären, Aufnahme eines aus dem Rohrleitungsabschnitt (61.1) entweichenden Fluidstroms (F) ausbildet, wobei an dem Gehäusekörper (11) beidseitig des Hohlraums (12) jeweils wenigstens eine Dichtelement (13) zur Bereitstellung einer vollumfänglichen oder im Wesentlichen vollumfänglichen Dichtwirkung zwischen dem Gehäusekörper (11) und der Rohrleitung (61) angeordnet ist.

## Beschreibung

Die Erfindung betrifft eine Leitungsmanschette, ein Verwertungssystem, ein Leitungssystem sowie ein Verfahren.

Gasnetze, wie sie zur Verteilung von Erdgas und/oder Wasserstoff (oder Gemischen daraus) an Industrie und Haushalte betrieben werden, sind weit verzweigt und unterliegen Alterungsmechanismen, die eine regelmäßige Wartung und Reparatur von Rohrleitungsabschnitten erforderlich machen. Insbesondere treten regelmäßig Undichtigkeiten durch die zumindest Teilmengen des in der jeweiligen Rohrleitung geführten Fluids in die Umgebung austreten können (Leckage bzw. Leckagestrom). Solche Leckagen können insbesondere an Flanschverbindungen zwischen einzelnen Rohrleitungselementen in Folge eines Verschleißes bzw. einer Versprödung der verwendeten Dichtungselemente auftreten. Ein Entweichen eines Leckagestroms in die Umgebung kann je nach Umweltverträglichkeit des betreffenden Fluids problematisch bzw. je nach regionalen Vorgaben unzulässig sein. So hat der Betreiber einer Gasnetzanlage in der Regel dafür Sorge zu tragen, dass etwaige Leckagen festgestellt und schnellstmöglich unterbunden werden.

Diesbezüglich hat es sich eine schnelle Instandsetzung eines betroffenen Rohrleitungsabschnitts aufgrund der hierfür notwendigen Stilllegung und einer damit einhergehenden Unterbrechung der Versorgung der mit dem Rohrleitungsabschnitt verbundenen Abnahmestellen als problematisch erwiesen. Es ist insofern wünschenswert, eine unkontrollierte Leckage eines in einer Rohrleitung geführten Fluids in die Umgebung zuverlässig und einfach verhindern zu können, bis ein geeigneter Zeitpunkt für eine umfangreiche Instandsetzung des betroffenen Rohrleitungsabschnitts gefunden wurde.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Leitungsmanschette, ein Verwertungssystem, ein Leitungssystem sowie ein Verfahren bereitzustellen, durch die unkontrollierte Leckagen bei einer Rohrleitung zuverlässig und effizient verhindert werden kann und insbesondere ein Zeitraum bis zu einer Instandsetzung des betroffenen Rohrleitungsabschnitts überbrückt werden kann.

Die voranstehende Aufgabe wird gelöst durch eine Leitungsmanschette gemäß einem ersten Aspekt der vorliegenden Erfindung, durch ein Verwertungssystem gemäß einem zweiten Aspekt der vorliegenden Erfindung, durch ein Leitungssystem gemäß einem dritten Aspekt der vorliegenden Erfindung sowie durch ein Verfahren gemäß einem vierten Aspekt der vorliegenden Erfindung.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Leitungsmanschette beschrieben sind, selbstverständlich auch im Zusammenhang mit dem erfindungsgemäßen Verwertungssystem und/oder im Zusammenhang mit dem erfindungsgemäßen Leitungssystem und/oder im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt betrifft die vorliegende Erfindung eine Leitungsmanschette zur vollumfänglichen Umfassung eines Rohrleitungsabschnitts einer, insbesondere fluidführenden, Rohrleitung, umfassend einen Gehäusekörper, wobei der Gehäusekörper einen Hohlraum zur, zumindest temporären, Aufnahme eines aus dem Rohrleitungsabschnitt entweichenden bzw. entwichenen Fluidstroms ausbildet, wobei an dem Gehäusekörper beidseitig des Hohlraums jeweils wenigstens ein Dichtelement zur Bereitstellung einer vollumfänglichen oder im Wesentlichen vollumfänglichen Dichtwirkung zwischen dem Gehäusekörper und der Rohrleitung angeordnet ist.

**In** anderen Worten wird eine Leitungsmanschette zur vollumfänglichen Umfassung bzw. Ummantelung eines Rohrleitungsabschnitts einer, vorzugsweise fluidführenden, Rohrleitung vorgeschlagen. Das in dem Rohrleitungsabschnitt geführte Fluid kann bevorzugt ein Gas, insbesondere Wasserstoff, Erdgas oder ein Gemisch aus Wasserstoff und Erdgas, sein.

Die Leitungsmanschette umfasst einen Gehäusekörper, welcher einen Hohlraum zur, zumindest temporären, Aufnahme eines aus dem Rohrleitungsabschnitt entweichenden Fluidstroms ausbildet. Entsprechend kann die Leitungsmanschette im Bereich einer Leckage entlang der Rohrleitung positioniert werden, sodass der aus der Rohrleitung austretende Leckagestrom des Fluids in den durch den Gehäusekörper ausgebildeten Hohlraum eintritt.

Ferner ist an dem Gehäusekörper beidseitig des Hohlraums jeweils wenigstens ein Dichtelement zur Bereitstellung einer vollumfänglichen oder im Wesentlichen vollumfänglichen Dichtwirkung zwischen dem Gehäusekörper und der Rohrleitung angeordnet. Insbesondere sind die Dichtelemente dazu vorgesehen bei einer Montage der Leitungsmanschette an einer Rohrleitung mit der Oberfläche der Rohrleitung in Anlage gebracht zu werden, um eine entsprechende Dichtwirkung herzustellen. Hierdurch kann bei einer Anordnung der Leitungsmanschette an der Rohrleitung ein Entweichen des Fluidstroms aus dem Hohlraum an den zwischen der Leitungsmanschette und der Rohrleitung ausgebildeten Kontaktflächen verhindert werden. Insbesondere kann wenigstens ein Dichtelement an einer der Rohrleitungsoberfläche zugewandten Fläche des Gehäusekörpers positioniert sein.

Wenigstens eine der Rohrleitungsoberfläche zugewandte Fläche des Gehäusekörpers kann insbesondere durch einen Flansch des Gehäusekörpers ausgebildet sein, wobei vorzugsweise sich der Flansch parallel oder im Wesentlichen parallel zu der Mittelachse der Rohrleitung erstreckt. Diese Angabe bezieht sich auf eine bestimmungsgemäße Anordnung der Leitungsmanschette an der Rohrleitung.

Durch eine erfindungsgemäße Leitungsmanschette ergibt sich der Vorteil, dass ein unkontrolliertes Entweichen eines Leckagestroms in die Umgebung verhindert wird. Die Leitungsmanschette wird im Bereich der Leckage derart positioniert, dass der aus der Rohrleitung entweichende Fluidstrom in den Hohlraum eintritt. Der Hohlraum ist durch den Gehäusekörper begrenzt und durch die Dichtelemente zur Rohrleitung abgedichtet, sodass der Fluidstrom aus dem Hohlraum nicht unkontrolliert entweichen kann. Somit kann der in dem Hohlraum aufgefangene Fluidstrom nachfolgend einer weiteren Verwertung kontrolliert zugeführt werden und/oder es kann zumindest eine Ermittlung der Menge des aus der Rohrleitung entwichenen Fluids festgestellt und das Fluid erst dann in die Umgebung ausgebracht werden. Eine Feststellung der entwichenen Menge ermöglicht eine Bilanzierung der in die Umgebung ausgebrachten Fluidmenge und eine Feststellung der daraus resultierenden Umweltschäden.

Vorteilhafterweise kann vorgesehen sein, dass der Gehäusekörper wenigstens zwei Gehäusesegmente umfasst, wobei jeweils zwei benachbarte Gehäusesegmente des Gehäusekörpers, insbesondere fluiddicht oder im Wesentlichen fluiddicht, miteinander verbindbar bzw. verbunden sind. In anderen Worten kann bevorzugt vorgesehen sein, dass der Gehäusekörper mehrteilig ausgebildet ist. Hierdurch wird eine einfache Montage des Gehäusekörpers an der Rohrleitung sowie ferner ein vereinfachter Transport des Gehäusekörpers ermöglicht. Insbesondere kann die Anzahl der Gehäuseabschnitte an den Rohrdurchmesser der Rohrleitung, für die die Leitungsmanschette bestimmt ist, angepasst werden. Diesbezüglich empfiehlt es sich, die Anzahl der Gehäusesegmente mit zunehmendem Durchmesser zu steigern. Wenigstens zwei Gehäusesegmente können identisch oder im Wesentlichen identisch ausgebildet sein. Bevorzugt kann es sich bei wenigstens einem Gehäusesegment um ein starres Bauteil handeln.

Bevorzugt kann vorgesehen sein, dass an wenigstens einer Stirnfläche wenigstens eines Gehäusesegments wenigstens ein Dichtelement zur Bereitstellung einer Dichtwirkung zwischen dem Gehäusesegment und einem benachbarten, insbesondere mit dem Gehäusesegment verbundenen bzw. verbindbaren, Gehäusesegment angeordnet ist. Hierdurch kann eine Abdichtung an den Kontaktflächen von benachbarten Gehäusesegmenten realisiert werden, um ein Entweichen des Fluids aus dem Hohlraum zu verhindern.

Wenigstens ein Dichtelement kann in Bezug auf die vorliegende Erfindung vorteilhafterweise aus einem Kunststoff, insbesondere aus einem Elastomer, ausgebildet sein. Zusätzlich oder alternativ kann wenigstens ein Dichtelement kann als ein O-Ring ausgebildet sein. Zusätzlich oder alternativ kann wenigstens ein Dichtelement, zumindest abschnittsweise, in einer Nut des Gehäusekörpers angeordnet sein. Hierdurch kann eine positionsfeste Anordnung des Dichtelements realisiert werden.

Grundsätzlich ist auch eine einstückige Ausbildung des Gehäusekörpers denkbar. Bspw. kann der Gehäusekörper, zumindest abschnittsweise, aus einem flexiblen Material ausgebildet sein, sodass insbesondere der Gehäusekörper um die Rohrleitung herumgelegt werden kann. An den Enden des Gehäusekörpers können Verbinder zum, insbesondere fluiddichten, Verbinden der Enden des Gehäusekörpers vorgesehen sein.

Zusätzlich oder alternativ kann vorgesehen sein, dass wenigstens zwei, insbesondere benachbart angeordnete, Gehäusesegmente gelenkig miteinander verbunden sind, insbesondere über ein Scharnier. Insbesondere kann die gelenkige Verbindung derart ausgebildet sein, dass das eine Gehäusesegment relativ zu dem anderen Gehäusesegment verschwenkbar ist. Die Schwenkachse kann bevorzugt parallel oder im Wesentlichen parallel zu einer Mittelachse der Rohrleitung angeordnet sein. Dies bezieht sich auf eine bestimmungsgemäße Positionierung der Leitungsmanschette an der Rohrleitung.

Ferner ist denkbar, dass die Verbindung zwischen wenigstens zwei, insbesondere benachbarten, Gehäusesegmenten durch wenigstens eine Flanschverbindung ausgebildet ist. Eine Flanschverbindung stellt eine besonders einfache und zuverlässige Art der Verbindung zwischen zwei Gehäusesegmenten dar. Eine Flanschverbindung kann insbesondere über an den Gehäusesegmenten ausgebildete, korrespondierende Verbindungsflansche ausgebildet sein, wobei die Verbindungsflansche durch wenigstens ein Befestigungsmittel, insbesondere wenigstens eine Schraube, miteinander verbunden sind. Durch das Befestigungsmittel können die Verbindungsflansche miteinander verspannt werden, wodurch die Gehäusesegmente bzw. der Gehäusekörper insgesamt mit der Rohrleitung verspannt bzw. an diese angepresst wird.

Zusätzlich oder alternativ kann vorgesehen sein, dass die Verbindung zwischen wenigstens zwei, insbesondere benachbarten, Gehäusesegmenten durch wenigstens einen Schnellspannverschluss ausgebildet ist. Durch die Verwendung eines Schnellspannverschlusses kann eine besonders einfache und zeiteffiziente Montage sowie Demontage der Leitungsmanschette an einer Rohrleitung realisiert werden. Zur Realisierung eines Schnellspannverschlusses kann bevorzugt an einem der beiden Gehäusesegmente ein Spannelement sowie ein mit dem Spannelement verbundener Spannhebel angeordnet sein, wobei durch den Spannhebel das Spannelement, zumindest abschnittsweise, relativ zu dem Gehäusesegment bewegbar ist. An dem jeweils anderen Gehäusesegment ist bevorzugt eine Aufnahme zur, zumindest abschnittsweise, formschlüssigen Aufnahme des Spannelements ausgebildet. So kann das Spannelement in die Aufnahme eingebracht werden und die beiden Gehäusesegmente anschließend durch eine Bewegung des Spannhebels miteinander verspannt werden.

Es kann ferner optional vorgesehen sein, dass eine Erfassungseinheit zur Erfassung wenigstens eines Fluidparameters umfasst ist, wobei wenigstens eine Fluidparameter einer der folgenden ist:
- Eine Stoffkonzentration bzw. eine Konzentration des aus dem Rohrleitungsabschnitt entwichenen Fluids, insbesondere eine Wasserstoff- und/oder Erdgaskonzentration, in dem Hohlraum und/oder außerhalb des Hohlraums,
- ein Druck in dem Hohlraum,
- eine Temperatur in dem Hohlraum,
- ein aus dem Hohlraum, insbesondere durch ein Sicherheitsabblaseventil und/oder einen Fluidentnahmestutzen, geführter Fluidmassenstrom und/oder Fluidvolumenstrom.

Die Erfassung einer Stoffkonzentration bzw. einer Konzentration des aus dem Rohrleitungsabschnitt entwichenen Fluids außerhalb des Hohlraums ermöglicht die Feststellung, ob auch nach der Anordnung der Leitungsmanschette an der Rohrleitung eine Leckage des Fluids in die Umgebung erfolgt bzw. in welchem Maße diese erfolgt. Insbesondere kann in Bezug auf eine Wasserstoff- und/oder Erdgaskonzentration auch überwacht werden, ob im Bereich der Leitungsmanschette ein explosionsfähiges Gasgemisch vorliegt. Dies betrifft in Bezug auf Erdgas bspw. eine Konzentration zwischen 4 Vol.-% und 16 Vol.-% in Luft. Auch kann somit der Nachweis geführt werden, dass durch die Leitungsmanschette eine unkontrollierte Leckage in die Umgebung verhindert wird.

Die Erfassungseinheit kann bevorzugt wenigstens einen Sensor zur Erfassung eines Fluidparameters umfassen bzw. mit wenigstens einem Sensor, zumindest temporär, in eine Kommunikationsverbindung bzw. Signalverbindung bringbar sein. Insbesondere kann die Erfassungseinheit wenigstens einen Konzentrationssensor zur Erfassung einer Stoffkonzentration, insbesondere einer Wasserstoff- und/oder Erdgaskonzentration, umfassen. Zusätzlich oder alternativ kann die Erfassungseinheit wenigstens einen Durchflusssensor zur Erfassung eines aus dem Hohlraum, insbesondere durch ein Sicherheitsabblaseventil und/oder einen Fluidentnahmestutzen, geführten Fluidmassenstrom und/oder Fluidvolumenstrom umfasse. Zusätzlich oder alternativ kann die Erfassungseinheit wenigstens einen Drucksensor und/oder wenigstens einen Temperatursensor zur Erfassung eines Drucks bzw. einer Temperatur in dem Hohlraum umfassen.

Wenigstens ein Sensor kann separat zur Erfassungseinheit ausgebildet sein und mit dieser kommunikativ in Verbindung stehen. Wenigstens ein Sensor kann in dem Hohlraum, insbesondere an einer Innenwand des Gehäusekörpers, oder an einer Außenwand des Gehäusekörpers angeordnet sein.

Die Temperatur und/oder der Druck in dem Hohlraum können bevorzugt zur Ermittlung einer Dichte des Fluids in dem Hohlraum der Leitungsmanschette herangezogen werden. Die Dichte kann insbesondere in Verbindung mit einem erfassten, durch ein Sicherheitsabblaseventil und/oder einen Fluidentnahmestutzen geführten Volumenstrom des Fluids zur Ermittlung des entsprechenden Massenstroms herangezogen werden.

Die Leitungsmanschette kann bevorzugt wenigstens ein Alarmmittel umfassen, wobei das Alarmmittel zur Ausgabe eines akustischen und/oder visuellen Warnsignals ausgebildet ist. Ein Alarmmittel zur Ausgabe eines akustischen Warnsignals kann bevorzugt ein Lautsprecher sein. Ein Alarmmittel zur Ausgabe eines visuellen Warnsignals kann bevorzugt eine Signalleuchte, insbesondere eine rotierende bzw. rotierbare, Rundumleuchte, sein.

Wenigstens ein Alarmmittel kann bevorzugt in Reaktion auf die Erfassung eines Erreichens oder Überschreitens eines Grenzwerts durch wenigstens einen Fluidparameter automatisch aktivierbar sein. Dies betrifft insbesondere das Erreichen oder Überschreiten eines vorgegebenen Grenzwerts durch eine Stoffkonzentration. Der Grenzwert kann bevorzugt charakteristisch sein für ein Vorliegen eines explosionsfähigen Gasgemisches im Bereich der Leitungsmanschette.

Auch ist es denkbar, dass eine Kommunikationseinheit zur Kommunikation mit einem zentralen Server und/oder wenigstens einem mobilen Gerät umfasst ist, wobei insbesondere die Kommunikationseinheit dazu ausgebildet ist wenigstens einen durch die Erfassungseinheit erfassen Fluidparameter an den zentralen Server und/oder wenigstens ein mobiles Gerät bzw. ein Netzwerk zu übermitteln. Ein mobiles Gerät kann insbesondere als ein Smartphone, ein Tablet, ein Laptop oder dergleichen ausgebildet sein. Ein Netzwerk kann insbesondere das Internet sein. Die Kommunikationseinheit kann bevorzugt wenigstens eine Kommunikationsschnittstelle zur, insbesondere drahtlosen, Kommunikation mit dem zentralen Server und/oder wenigstens einem mobilen Gerät aufweisen. Eine Kommunikationsschnittstelle kann bspw. als eine WLAN-Schnittstelle oder besonders bevorzugt als eine Mobilfunk-Schnittstelle ausgebildet sein. Durch die Kommunikation mit einem zentralen Server und/oder wenigstens einem mobilen Gerät können die seitens der Leitungsmanschette bzw. die durch die Erfassungseinheit erfassten Daten ortsunabhängig verteilt und bereitgestellt werden. Ferner wird hierdurch eine automatisierte Auswertung ermöglicht.

Insbesondere kann zusätzlich oder alternativ auch wenigstens eine Erfassungseinheit und/oder Kommunikationseinheit bei wenigstens einem Verwertungsmodul vorgesehen sein. Die in Bezug auf eine Erfassungseinheit und/oder Kommunikationseinheit beschriebenen Merkmale können diesbezüglich gleichermaßen bzw. in beliebiger Kombination Anwendung finden.

Ferner ist es vorstellbar, dass an dem Gehäusekörper wenigstens ein Einfüllstutzen zum Einbringen eines Dichtmittels in den Hohlraum und/oder wenigstens ein Fluidentnahmestutzen zur Entnahme eines Fluids aus dem Hohlraum angeordnet bzw. ausgebildet ist, wobei insbesondere der Einfüllstutzen und/oder der Fluidentnahmestutzen als Gewindestutzen ausgebildet ist. Es kann vorgesehen sein, dass ein einzelner Stutzen, insbesondere Gewindestutzen, sowohl als Fluidentnahmestutzen, als auch als Einfüllstutzen nutzbar ist. In anderen Worten kann vorgesehen sein, dass an dem Gehäusekörper wenigstens ein Einfüllstutzen ausgebildet ist, wobei über den Einfüllstutzen, welcher bevorzugt als Gewindestutzen ausgebildet sein kann, ein Dichtmittel in den durch den Gehäusekörper ausgebildeten Hohlraum einbringbar ist und/oder ein Fluid bzw. Fluidstrom aus dem Hohlraum entnehmbar ist.

Wenigstens ein Gewindestutzen weist bevorzugt einen Gewindeabschnitt zur, insbesondere fluiddichten oder im Wesentlichen fluiddichten, Verbindung einer Leitung, insbesondere eines Druckschlauchs oder dergleichen, mit dem Gewindestutzen auf.

Wenigstens ein Fluidentnahmestutzen kann bevorzugt einen Absperrhahn, insbesondere Absperrventil oder einen Kugelhahn, umfassen, wobei durch den Absperrhahn ein Fluidstrom durch den Fluidentnahmestutzen, insbesondere aus dem Hohlraum hinaus, unterbunden bzw. freigegeben werden kann. So kann bspw. ein Verwertungsmodul fluidisch mit dem Fluidentnahmestutzen verbunden und der Fluidstrom bzw. die Fluidverbindung erst nach der vollständigen Herstellung der Verbindung zwischen Verwertungsmodul und Fluidentnahmestutzen freigegeben werden.

Zum Einbringen eines Dichtmittels kann insbesondere eine Leitung, insbesondere ein Druckschlauch, in welcher das Dichtmittel geführt wird, mit dem Einfüllstutzen verbunden werden und das Dichtmittel sodann über die Leitung in den Hohlraum eingebracht werden. Hierdurch können Undichtigkeiten an der Rohrleitung bzw. dem betreffenden Rohrleitungsabschnitt reduziert bzw. eliminiert und eine weitere Leckage verhindert werden. Das Dichtmittel kann bspw. ein Dichtschaum oder dergleichen sein.

Zum Ausbringen des Fluids bzw. eines Fluidstroms aus dem Hohlraum kann eine Leitung, insbesondere ein Druckschlauch, mit dem Fluidentnahmestutzen verbunden werden. Bevorzugt kann ein natürliches Druckgefälle dahingehend ausgenutzt werden, dass das Fluid aus dem Hohlraum in die Leitung entweiche. Über die Leitung kann das Fluid bzw. der Fluidstrom einer weiteren Verwertung, insbesondere in einem Verwertungsmodul, zugeführt werden.

Ferner ist es vorstellbar, dass an dem Gehäusekörper wenigstens ein Sicherheitsabblaseventil zum Abblasen von Fluid aus dem Hohlraum ausgebildet bzw. angeordnet ist, wobei das Sicherheitsabblaseventil dazu ausgebildet ist zu öffnen, wenn ein Druck in dem Hohlraum einen vorgegebenen Grenzwert erreicht oder überschreitet. Hierdurch kann eine Beschädigung der Leitungsmanschette im Falle eines sich im Hohlraum aufbauenden kritischen Überdrucks vermieden werden.

Gemäß einem zweiten Aspekt betrifft die vorliegende Erfindung ferner ein Verwertungssystem, umfassend wenigstens eine Leitungsmanschette gemäß dem ersten Aspekt der vorliegenden Erfindung sowie wenigstens ein Verwertungsmodul zur Verwertung eines aus dem Hohlraum wenigstens einer Leitungsmanschette entnommenen Fluidstroms, wobei wenigstens ein Verwertungsmodul mit dem Hohlraum wenigstens einer Leitungsmanschette, insbesondere über einen Fluidentnahmestutzen und/oder ein Sicherheitsabblaseventil der Leitungsmanschette, in Fluidverbindung steht. Damit ergeben sich in Bezug auf ein erfindungsgemäßes Verwertungssystem die gleichen Vorteile, wie sie bereits in Bezug auf eine erfindungsgemäße Leitungsmanschette beschrieben worden sind. Ferner im Rahmen einer Verwertung ein energetischer Nutzen aus dem aus der Rohrleitung entwichenen Fluidstrom gezogen werden und/oder dessen Umwelteinfluss verringert werden.

Eine Fluidverbindung zwischen wenigstens einem Verwertungsmodul und dem Hohlraum bzw. zwischen wenigstens zwei Verwertungsmodulen kann bevorzugt über eine Leitung ausgebildet sein, insbesondere ein Rohr oder ein Schlauch, bevorzugt ein Hochdruckschlauch.

Es kann vorgesehen sein, dass das Verwertungssystem eine Mehrzahl von Verwertungsmodulen umfassen. Wenigstens zwei Verwertungsmodule können in Reihe geschaltet bzw. angeordnet sein. Hiermit ist gemeint, dass ein Fluidstrom zunächst dem einen und anschließend dem anderen Verwertungsmodul zugeführt wird. Zusätzlich oder alternativ können wenigstens zwei Verwertungsmodule parallel geschaltet bzw. parallel angeordnet sein. Hiermit ist gemeint, dass den jeweiligen Verwertungsmodulen unabhängige bzw. separate Fluidströme zugeführt werden.

Vorteilhafterweise kann vorgesehen sein, dass wenigstens ein Verwertungsmodul als ein Speichermodul, zur, zumindest temporären, Speicherung des, insbesondere dem Speichermodul zugeführten, Fluidstroms ausgebildet ist, wobei insbesondere das Speichermodul wenigstens einen Speichertank zur Aufnahme des Fluidstroms umfasst. Durch die Verwendung eines Speichermoduls kann das aus der Rohrleitung entwichene Fluid, zumindest teilweise aufgefangen und zwischengespeichert werden. Auch kann das Fluid aus wenigstens einem Speichertank wenigstens einem weiteren Verwertungsmodul zugeführt werden. Zusätzlich oder alternativ kann das Fluid aus wenigstens einem Speichertank zurück in den Rohrleitungsabschnitt geführt werden, insbesondere wenn dieser Instand gesetzt wurde. Dies kann bspw. unter Verwendung eines Kompressionsmoduls erfolgen.

Zusätzlich oder alternativ kann wenigstens ein Speichermodul einen elektrischen Energiespeicher umfassen. Der elektrische Energiespeicher kann bevorzugt als eine, insbesondere wieder aufladbare, Batterie ausgebildet sein. Auf diese Weise kann im Rahmen der Verwertung erzeugte elektrische Energie, zumindest temporär, zwischengespeichert werden. Dies kann bspw. durch wenigstens ein Brennstoffzellenmodul oder ein Generatormodul erzeugte elektrische Energie sein. Dies ermöglicht die Verwendung der elektrischen Energie an anderer Stelle und/oder zur Eigenversorgung der Leitungsmanschette bzw. des Verwertungssystems oder zumindest einzelner Komponenten des Verwertungssystems.

Zusätzlich oder alternativ kann vorgesehen sein, dass wenigstens ein Verwertungsmodul als ein Kompressionsmodul zur Kompression des, insbesondere dem Kompressionsmodul zugeführten, Fluidstroms ausgebildet ist und wobei bevorzugt das Kompressionsmodul wenigstens einen Kompressor umfasst. Das Kompressionsmodul kann eine Mehrzahl von, insbesondere seriell und/oder parallel durchströmten, Kompressoren umfassen. Wenigstens ein Kompressor kann als ein Turboverdichter und/oder Piezoverdichter ausgebildet sein. Ein Kompressionsmodul kann bspw. einem Speichermodul vorgeschaltet werden, um das Fluid vor dem Einbringen in einen Speichertank zu komprimieren und eine platzsparende Aufbewahrung zu ermöglichen. Auch kann ein Kompressionsmodul verwendet werden, um das Fluid aus wenigstens einem Speichertank zurück in den Rohrleitungsabschnitt oder in einen abweichenden Rohrleitungsabschnitt einzubringen. Auch kann ein Kompressionsmodul weiteren Verwertungsmodulen, bspw. einem Fackelmodul, vorgeschaltet werden, um ein im Rahmen einer weiteren Verwertung des Fluids benötigtes Druckniveau bereitzustellen.

Ferner ist denkbar, dass wenigstens ein Verwertungsmodul als ein Fackelmodul zum, zumindest teilweisen, Abbrennen des, insbesondere dem Fackelmodul zugeführten, Fluidstroms ausgebildet ist. Das, zumindest teilweise, Abbrennen des Fluidstroms kann erforderlich sein, wenn der Einsatzort des Fluidtransfersystems eine anderweitige Verwertung des Fluidstroms oder ein Auffangen des Fluidstroms nicht oder zumindest nicht vollständig zulassen. Durch ein Abbrennen des Fluidstroms kann der negative Einfluss auf die Umwelt gegenüber einem unmittelbaren Ablassen des Fluidstroms in die Atmosphäre abgemindert werden.

Ferner ist es vorstellbar, dass das Fackelmodul eine Abgasmessung bzw. Abgasmesseinheit zur Erfassung einer Menge der emittierten Schadstoffe und/oder einer Abgastemperatur umfasst. Hierdurch kann der Umwelteinfluss des abgebrannten Fluids bilanziert und nachverfolgt werden. Die Schadstoffe können insbesondere unverbranntes Fluid (insbesondere Erdgas oder Wasserstoff oder Gemische daraus), Ruß, Kohlenmonoxid sowie Stickoxide umfassen. Zur Abgasmessung bzw. in der Abgasmesseinheit können entsprechende Sensoren zum Einsatz kommen.

Im Rahmen der Erfindung kann es von Vorteil sein, dass das Fackelmodul eine Zufuhrsteuerung zur Anpassung und/oder Überwachung des dem Fackelmodul zur Verbrennung zugeführten Fluidstroms und/oder eines dem Fackelmodul zugeführten Oxidationsmittelstroms, insbesondere Luftstroms, umfasst. Auf diese Weise kann durch die Zufuhrsteuerung das Brennstoff-Luft-Verhältnis der Verbrennung in dem Fackelmodul überwacht und angepasst werden, insbesondere um eine vollständige, insbesondere stöchiometrische, Verbrennung zugeführten Fluidstroms zu gewährleisten. Hierdurch können die im Rahmen der Verbrennung entstehenden Schadstoffe reduziert und das Entweichen unverbrannten Fluids in die Atmosphäre vermieden werden. Insbesondere kann in diesem Zusammenhang eine Lambdasonde bei der Zufuhrsteuerung zum Einsatz kommen, mit welcher der Restsauerstoffgehalt im Abgas erfassbar ist. Hieraus kann das Brennstoff-Luft-Verhältnis bestimmt und bei Bedarf der die Menge des zugeführten Fluidstroms bzw. Oxidationsmittelstroms angepasst werden.

Einem Fackelmodul kann bevorzugt zumindest der aus einem Sicherheitsabblaseventil wenigstens einer Leitungsmanschette entwichene Fluidstrom zugeführt werden. So kann eine Verringerung der Umweltschädlichkeit insbesondere auch für das Fluid sichergestellt werden, welches aufgrund eines Überdrucks aus dem Hohlraum der Leitungsmanschette ausgelassen werden muss.

Im Rahmen der Erfindung ist es denkbar, dass das Fackelmodul eine Flammkontrolleinheit zur Feststellung des Vorhandenseins einer Flamme umfasst. Die Flammkontrolleinheit kann insbesondere wenigstens einen Temperatursensor und/oder wenigstens einen optischen Sensor umfassen. Durch die Flammkontrolleinheit kann somit festgestellt werden, ob der dem Fackelmodul zugeführte Fluidstrom tatsächlich abgebrannt wird oder ob die Flamme erloschen ist und der Fluidstrom unverbrannt in die Umgebung entweicht. Sollte festgestellt werden, dass keine Flamme vorhanden ist, so kann insbesondere eine Zufuhr des Fluidstroms zu dem Fackelmodul unterbrochen werden bzw. eine erneute Zündung an dem Fackelmodul ausgelöst werden. Dies hat sich insbesondere bei der Verbrennung von Wasserstoff als vorteilhaft erwiesen.

Es kann ferner vorgesehen sein, dass wenigstens ein Verwertungsmodul als ein Brennstoffzellenmodul zur Erzeugung elektrischer Energie aus dem, insbesondere dem Brennstoffzellenmodul zugeführten, Fluidstrom ausgebildet ist. Das Verwertungsmodul kann bevorzugt wenigstens ein Brennstoffzellensystem zur Erzeugung elektrischer Energie aus Wasserstoff umfassen. Das Brennstoffzellensystem kann eine Mehrzahl von Brennstoffzellen bzw. eine Mehrzahl von Brennstoffzellenstacks umfassen. Handelt es sich bei dem aus der Rohrleitung bzw. dem Hohlraum der Leitungsmanschette entnommenen Fluid um Wasserstoff, kann dieser somit zur Erzeugung elektrischer Energie weiterverwendet werden.

Zusätzlich oder alternativ ist denkbar, dass wenigstens ein Verwertungsmodul als ein Pyrolysemodul zur thermischen Zersetzung des, insbesondere dem Pyrolysemodul zugeführten, Fluidstroms ausgebildet ist. Handelt es sich bei dem aus der Rohrleitung bzw. dem Hohlraum der Leitungsmanschette entnommenen Fluid bspw. um Erdgas, so kann dieses im Rahmen der Pyrolyse in Wasserstoff und Kohlenstoff zersetzt werden. Der Wasserstoff kann bevorzugt nachfolgend weiterverwendet werden, insbesondere in einem Brennstoffzellenmodul. Der Kohlenstoff kann als Abfallprodukt (Ruß) entsorgt werden.

Zusätzlich oder alternativ ist denkbar, dass wenigstens ein Verwertungsmodul als ein Antriebsmodul zur Erzeugung einer mechanischen Energie, insbesondere Antriebsenergie, aus dem, insbesondere dem Antriebsmodul zugeführten, Fluidstrom ausgebildet ist. Wenigstens ein Antriebsmodul kann wenigstens eine Antriebsmaschine umfassen. Wenigstens eine Antriebsmaschine kann als ein Elektromotor oder ein Verbrennungsmotor ausgebildet sein. Der Einsatz eines Verbrennungsmotors bietet den Vorteil, dass oftmals das aus der Rohrleitung bzw. dem Hohlraum der Leitungsmanschette entnommene Fluid ein Erdgas oder ein Wasserstoff bzw. ein Erdgas/Wasserstoff-Gemisch ist und der Fluidstrom somit, zumindest in Teilen, der Antriebsmaschine als Brennstoff zugeführt werden, um wiederum mechanische Energie zum Antrieb bspw. eines Kompressors durch die Antriebsmaschine zu erzeugen. Durch dieses Vorgehen kann auf das Vorhalten von Kraftstoffvorräten verzichtet bzw. zumindest die Menge des vorzuhaltenden Kraftstoffs reduziert werden. Ein Elektromotor kann bspw. durch ein als Brennstoffzellenmodul ausgebildetes Verwertungsmodul mit elektrischer Energie, zumindest teilweise, versorgt werden. Zusätzlich oder alternativ kann wenigstens eine Antriebsmaschine als ein Stirlingmotor ausgebildet sein, wobei insbesondere dem Stirlingmotor thermische Energie bzw. Wärme aus einer Verbrennung des dem Antriebsmodul zugeführten Fluids bzw. Fluidstroms zuführbar ist.

Wenigstens ein Antriebsmodul kann dazu vorgesehen sein, wenigstens einen Kompressor eines Kompressionsmoduls und/oder wenigstens einen Generator eines Generatormoduls anzutreiben. Hierzu kann eine mechanische Wirkverbindung, insbesondere über wenigstens eine Welle, zwischen den jeweiligen Modulen bzw. Komponenten ausgebildet sein.

Es kann ferner vorgesehen sein, dass wenigstens ein Verwertungsmodul als ein Generatormodul zur Erzeugung elektrischer Energie aus mechanischer Energie, insbesondere Antriebsenergie, ausgebildet ist. Das Generatormodul kann bevorzugt wenigstens einen, insbesondere als elektrische Maschine ausgebildeten, Generator umfassen. Insbesondere kann wenigstens ein als elektrische Maschine ausgebildeter Generator durch wenigstens eine Antriebsmaschine eines Antriebsmoduls angetrieben werden bzw. antreibbar sein. Zusätzlich oder alternativ kann das Generatormodul wenigstens einen thermoelektrischen Generator umfassen, wobei insbesondere dem thermoelektrischen Generator thermische Energie bzw. Wärme aus einer Verbrennung des dem Generatormodul zugeführten Fluids bzw. Fluidstroms zuführbar ist.

Es kann im Rahmen der Erfindung vorgesehen sein, dass das Verwertungssystem und/oder wenigstens ein Verwertungsmodul als eine mobile Einheit ausgebildet ist und/oder dass das Gesamtgewicht des Verwertungssystems kleiner oder gleich 750 kg beträgt. Hierdurch ergibt sich eine erhöhte Mobilität des Verwertungssystems und eine flexible und zeiteffiziente Verwendbarkeit an unterschiedlichen Einsatzorten aufgrund eines vereinfachten Transports. Insbesondere kann das Verwertungssystem bzw. wenigstens ein Verwertungsmodul als ein Anhänger ausgebildet sein bzw. können die Verwertungsmodule des Fluidtransfersystems auf einer fahrbaren Plattform angeordnet sein.

Gemäß einem dritten Aspekt betrifft die vorliegende Erfindung ferner ein Leitungssystem, umfassend eine Rohrleitung sowie wenigstens eine Leitungsmanschette gemäß dem ersten Aspekt der vorliegenden Erfindung, wobei wenigstens ein Rohrleitungsabschnitt der Rohrleitung durch wenigstens eine Leitungsmanschette vollumfänglich umfasst ist. Insbesondere kann vorgesehen sein, dass je ein Rohrleitungsabschnitt durch jede Leitungsmanschette vollumfänglich umfasst ist.

Zusätzlich oder alternativ kann das Leitungssystem ein Verwertungssystem gemäß dem zweiten Aspekt der vorliegenden Erfindung umfassen, wobei insbesondere das Verwertungssystem wenigstens eine Leitungsmanschette gemäß dem ersten Aspekt der vorliegenden Erfindung umfasst und wobei wenigstens ein Rohrleitungsabschnitt der Rohrleitung durch wenigstens eine Leitungsmanschette des Verwertungssystems vollumfänglich umfasst ist.

Damit ergeben sich in Bezug auf ein erfindungsgemäßes Leitungssystem die gleichen Vorteile, wie sie bereits in Bezug auf eine erfindungsgemäße Leitungsmanschette und/oder ein erfindungsgemäßes Verwertungssystem beschrieben worden sind.

Eine Rohrleitung kann sich aus einer Mehrzahl von Rohrelementen bzw. Rohrleitungselementen zusammensetzen, wobei insbesondere aneinander angrenzende Rohrelemente, bspw. über eine Flanschverbindung, miteinander verbunden sind.

Bevorzugt ist vorstellbar, dass wenigstens ein Rohrleitungsabschnitt wenigstens eine Flanschverbindung zwischen zwei Rohrelementen der Rohrleitung umfasst, sodass die wenigstens eine Flanschverbindung in dem Hohlraum einer Leitungsmanschette angeordnet ist. Da Flanschverbindungen zwischen Rohrelementen Schwachstellen von Rohrleitungen in Bezug auf deren Dichtigkeit darstellen, stellt der Bereich einer Flanschverbindung einen bevorzugten Anwendungsbereich einer erfindungsgemäßen Leitungsmanschette dar.

Gemäß einem vierten Aspekt betrifft die vorliegende Erfindung ferner ein Verfahren zur Verwendung einer Leitungsmanschette gemäß dem ersten Aspekt der vorliegenden Erfindung und/oder eines Verwertungssystems gemäß dem zweiten Aspekt der vorliegenden Erfindung, das Verfahren umfassend:
- Anordnen der Leitungsmanschette an einer Rohrleitung, sodass die Leitungsmanschette einen Rohrleitungsabschnitt der Rohrleitung vollständig umfasst.

Damit ergeben sich in Bezug auf ein erfindungsgemäßes Verfahren die gleichen Vorteile, wie sie bereits in Bezug auf eine erfindungsgemäße Leitungsmanschette und/oder ein erfindungsgemäßes Verwertungssystem und/oder ein erfindungsgemäßes Leitungssystem beschrieben worden sind.

Das Verfahren kann bevorzugt ferner wenigstens eines der folgenden umfassen:
- Abblasen von Fluid bzw. eines Fluidstroms aus dem Hohlraum einer Leitungsmanschette, wenn ein Druck in dem Hohlraum einen vorgegebenen Grenzwert erreicht oder überschreitet, insbesondere durch ein Sicherheitsabblaseventil,
- Einbringen eines Dichtmittels in den Hohlraum einer Leitungsmanschette zum Abdichten der Rohrleitung bzw. des Rohrleitungsabschnitts, insbesondere durch einen Einfüllstutzen,
- Erfassen wenigstens eines Fluidparameters, insbesondere durch eine Erfassungseinheit,
- Übermitteln wenigstens eines Fluidparameters an einen zentralen Server und/oder an wenigstens ein mobiles Gerät, insbesondere durch eine Kommunikationseinheit und/oder
- Herstellen einer Fluidverbindung zwischen wenigstens einer Leitungsmanschette und wenigstens einem Verwertungsmodul, insbesondere über einen Fluidentnahmestutzen der Leitungsmanschette, und vorzugsweise Verwerten eines aus wenigstens einem Hohlraum einer Leitungsmanschette entnommenen Fluids bzw. Fluidstroms in wenigstens einem Verwertungsmodul bzw. den durch das Verwertungssystem umfassten Verwertungsmodulen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: eine schematische Ansicht eines Leitungssystems mit einer Leitungsmanschette,
- Fig. 2: eine schematische Ansicht einer Leitungsmanschette,
- Fig. 3: eine schematische Ansicht eines Verwertungssystems und
- Fig. 4: eine schematische Ansicht eines Verfahrens.

In den Figuren werden für die gleichen technischen Merkmale, auch von unterschiedlichen Ausführungsbeispielen, die identischen Bezugszeichen verwendet.

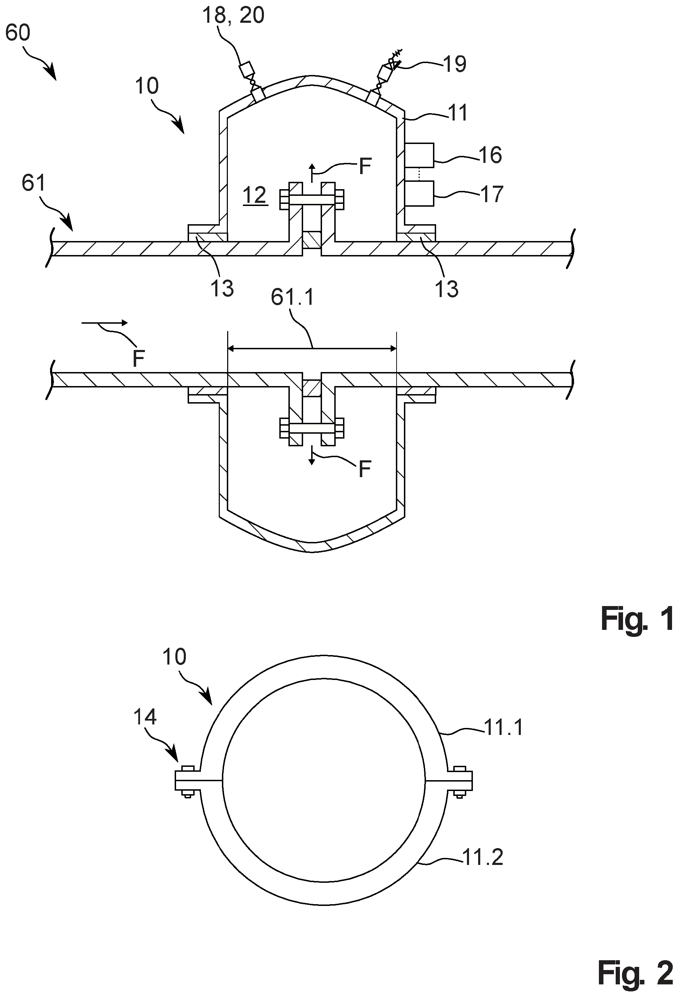

Fig. 1 zeigt eine schematische Ansicht einer Leitungsmanschette 10 zur vollumfänglichen Umfassung eines Rohrleitungsabschnitts 61.1 einer Rohrleitung 61. Die Leitungsmanschette 10 umfasst einen Gehäusekörper 11, welcher einen Hohlraum 12 zur, zumindest temporären, Aufnahme eines aus dem Rohrleitungsabschnitt 61.1 entweichenden Fluidstroms F vorgesehen ist. An dem Gehäusekörper 11 ist beidseitig des Hohlraums 12 ferner jeweils wenigstens ein Dichtelement 13 zur Bereitstellung einer vollumfänglichen oder im Wesentlichen vollumfänglichen Dichtwirkung zwischen dem Gehäusekörper 11 und der Rohrleitung 61 angeordnet.

Es wird aus Fig. 1 ersichtlich, dass an dem Gehäusekörper 11 ein Einfüllstutzen 18 zum Einbringen eines Dichtmittels in den Hohlraum 12 ausgebildet ist. Der Einfüllstutzen 18 dient zugleich als Fluidentnahmestutzen 20 zur Entnahme eines Fluids aus dem Hohlraum 12.

Ferner ist an dem Gehäusekörper 11 ein Sicherheitsabblaseventil 19 zum Abblasen von Fluid aus dem Hohlraum 12 angeordnet, wobei das Sicherheitsabblaseventil 19 dazu ausgebildet ist zu öffnen, wenn ein Druck in dem Hohlraum 12 einen vorgegebenen Grenzwert erreicht oder überschreitet.

Ferner umfasst die Leitungsmanschette 10 eine Erfassungseinheit 16 zur Erfassung wenigstens eines Fluidparameters sowie eine Kommunikationseinheit 17 zur Kommunikation mit einem zentralen Server und/oder wenigstens einem mobilen Gerät umfasst, wobei insbesondere die Kommunikationseinheit 17 dazu ausgebildet ist wenigstens einen durch die Erfassungseinheit 16 erfassen Fluidparameter an den zentralen Server und/oder wenigstens ein mobiles Gerät zu übermitteln.

Fig. 2 zeigt ferner eine schematische Ansicht einer Leitungsmanschette 10, wobei ersichtlich wird, dass der Gehäusekörper 11 aus zwei Gehäusesegmenten 11.1, 11.2 ausgebildet ist, wobei die beiden Gehäusesegmente 11.1, 11.2 über eine Flanschverbindung 14 miteinander verbunden sind.

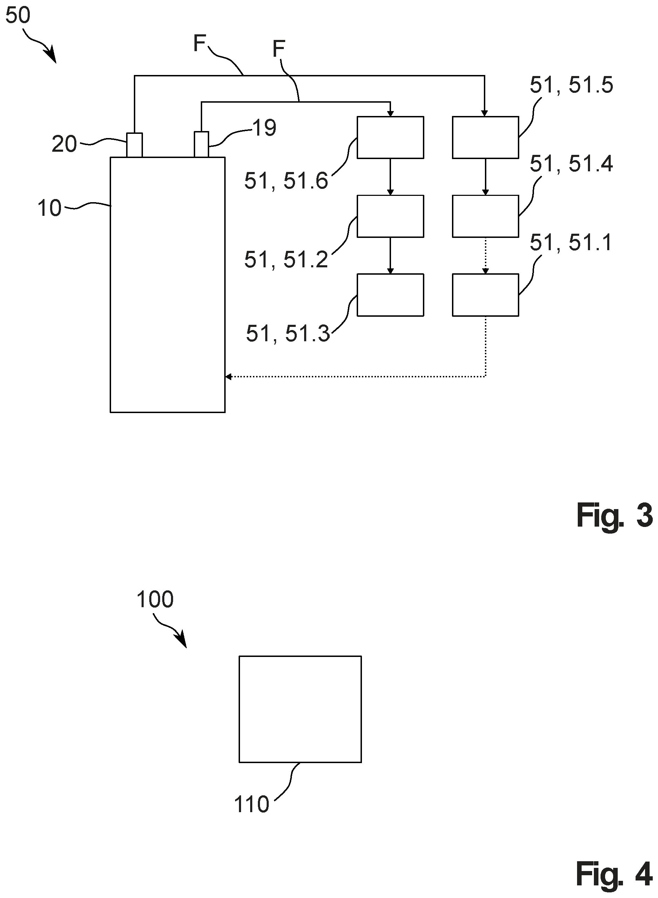

Fig. 3 zeigt eine schematische Ansicht eines Verwertungssystems 50, umfassend wenigstens eine Leitungsmanschette 10 gemäß dem ersten Aspekt der vorliegenden Erfindung sowie wenigstens ein Verwertungsmodul 51 zur Verwertung eines aus dem Hohlraum 12 wenigstens einer Leitungsmanschette 10 entnommenen Fluidstroms F, wobei wenigstens ein Verwertungsmodul 51 mit dem Hohlraum 12 wenigstens einer Leitungsmanschette 10, insbesondere über einen Fluidentnahmestutzen 20 und/oder ein Sicherheitsabblaseventil 19 der Leitungsmanschette 10, in Fluidverbindung steht.

Die in Fig. 3 gezeigte Konfiguration eines Verwertungssystems 50 ist lediglich als Beispiel zu verstehen. Die jeweiligen Verwertungsmodule 51 können darüber hinaus alleinstehend oder in beliebigen anderen Kombinationen innerhalb eines Verwertungssystems 50 verwendet werden.

Vorliegend umfasst das Verwertungssystem 50 ein Antriebsmodul 51.6, ein Kompressionsmodul 51.2 sowie ein Fackelmodul 51.3, welche in dieser Reihenfolge in Reihe angeordnet bzw. in Reihe geschaltet sind. Dabei steht das Antriebsmodul 51.6 über ein Sicherheitsabblaseventil 19 in Fluidverbindung mit dem Hohlraum 12 der Leitungsmanschette 10. Der im Falle eines zu hohen Überdrucks aus dem Sicherheitsabblaseventil 19 austretende Fluidstrom F wird dem Antriebsmodul 51.6 zugeführt. Dieses nutzt einen Teil des Fluidstroms F zum Antrieb einer Antriebsmaschine, welche wiederum wenigstens einen Kompressor des Kompressionsmoduls 51.2 zur Kompression des verbleibenden Fluidstroms F antreibt. Die Kompression dient dabei einer Vorverdichtung für eine anschließende Verbrennung des verbleibenden Fluidstroms F in dem Fackelmodul 51.3.

Ferner umfasst das Verwertungssystem 50 ein Pyrolysemodul 51.5, ein Brennstoffzellenmodul 51.4 sowie ein Speichermodul 51.1, welche in dieser Reihenfolge in Reihe angeordnet bzw. in Reihe geschaltet sind. Dabei steht das Pyrolysemodul 51.5 über einen Fluidentnahmestutzen 20 in Fluidverbindung mit dem Hohlraum 12 der Leitungsmanschette 10. Der aus einem Rohrleitungsabschnitt 61.1 austretende Fluidstrom F kann entsprechend dem Pyrolysemodul 51.5 zugeführt werden. Handelt es sich bei dem Fluidstrom F um ein Erdgas, so wird durch das Pyrolysemodul 51.5 Wasserstoff aus dem Erdgas erzeugt, welcher wiederum dem Brennstoffzellenmodul 51.4 zur Erzeugung elektrischer Energie zugeführt wird. Die durch das Brennstoffzellenmodul 51.4 erzeugte elektrische Energie wird durch das Speichermodul 51.1 gespeichert und kann bei Bedarf bspw. zur Eigenversorgung der Leitungsmanschette 10, insbesondere der Kommunikationseinheit 17 und/oder Erfassungseinheit 16, genutzt werden.

Fig. 4 zeigt ferner eine schematische Ansicht eines Verfahrens 100 Verwendung einer Leitungsmanschette 10 gemäß dem ersten Aspekt der vorliegenden Erfindung, umfassend:
- Anordnen 110 der Leitungsmanschette 10 an einer Rohrleitung 61, sodass die Leitungsmanschette 10 einen Rohrleitungsabschnitt 61.1 der Rohrleitung 61 vollständig umfasst.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Leitungsmanschette
- 11: Gehäusekörper
- 11.1: Gehäusesegment
- 11.2: Gehäusesegment
- 12: Hohlraum
- 13: Dichtelement
- 14: Flanschverbindung
- 16: Erfassungseinheit
- 17: Kommunikationseinheit
- 18: Einfüllstutzen
- 19: Sicherheitsabblaseventil
- 20: Fluidentnahmestutzen
- 50: Verwertungssystem
- 51: Verwertungsmodul
- 51.1: Speichermodul
- 51.2: Kompressionsmodul
- 51.3: Fackelmodul
- 51.4: Brennstoffzellenmodul
- 51.5: Pyrolysemodul
- 51.6: Antriebsmodul
- 60: Leitungssystem
- 61: Rohrleitung
- 61.1: Rohrleitungsabschnitt
- 100: Verfahren
- 110: Anordnen
- F: Fluidstrom

## Patentansprüche

1. Leitungsmanschette (10) zur vollumfänglichen Umfassung eines Rohrleitungsabschnitts (61.1) einer, insbesondere fluidführenden, Rohrleitung (61), umfassend einen Gehäusekörper (11), wobei der Gehäusekörper (11) einen Hohlraum (12) zur, zumindest temporären, Aufnahme eines aus dem Rohrleitungsabschnitt (61.1) entweichenden Fluidstroms (F) ausbildet, wobei an dem Gehäusekörper (11) beidseitig des Hohlraums (12) jeweils wenigstens ein Dichtelement (13) zur Bereitstellung einer vollumfänglichen oder im Wesentlichen vollumfänglichen Dichtwirkung zwischen dem Gehäusekörper (11) und der Rohrleitung (61) angeordnet ist.

2. Leitungsmanschette (10) nach Anspruch 1,
**dadurch gekennzeichnet,**
**dass** der Gehäusekörper (11) wenigstens zwei Gehäusesegmente (11.1, 11.2) umfasst, wobei jeweils zwei benachbarte Gehäusesegmente (11.1, 11.2) des Gehäusekörper (11) miteinander verbindbar sind und/oder
**dass** wenigstens zwei benachbarte Gehäusesegmente (11.1, 11.2) gelenkig miteinander verbunden sind.

3. Leitungsmanschette (10) nach Anspruch 2,
**dadurch gekennzeichnet,**
**dass** die Verbindung zwischen wenigstens zwei Gehäusesegmente (11.1, 11.2) durch wenigstens eine Flanschverbindung (14) ausgebildet ist und/oder dass die Verbindung zwischen wenigstens zwei Gehäusesegmente (11.1, 11.2) durch wenigstens einen Schnellspannverschluss ausgebildet ist.

4. Leitungsmanschette (10) nach einem der vorhergehenden Ansprüche,
**dadurch gekennzeichnet,**
**dass** eine Erfassungseinheit (16) zur Erfassung wenigstens eines Fluidparameters umfasst ist, wobei wenigstens eine Fluidparameter einer der folgenden ist:
- Eine Stoffkonzentration, insbesondere eine Wasserstoff- und/oder Erdgaskonzentration, außerhalb des Hohlraums (12),
- ein Druck in dem Hohlraum (12),
- eine Temperatur in dem Hohlraum (12),
- ein aus dem Hohlraum (12), insbesondere durch ein Sicherheitsabblaseventil (19) und/oder einen Fluidentnahmestutzen (20), geführter Fluidmassenstrom und/oder Fluidvolumenstrom.

5. Leitungsmanschette (10) nach einem der vorhergehenden Ansprüche,
**dadurch gekennzeichnet,**
**dass** eine Kommunikationseinheit (17) zur Kommunikation mit einem zentralen Server und/oder wenigstens einem mobilen Gerät umfasst ist, wobei insbesondere die Kommunikationseinheit (17) dazu ausgebildet ist wenigstens einen durch die Erfassungseinheit (16) erfassen Fluidparameter an den zentralen Server und/oder wenigstens ein mobiles Gerät zu übermitteln.

6. Leitungsmanschette (10) nach einem der vorhergehenden Ansprüche,
**dadurch gekennzeichnet,**
**dass** an dem Gehäusekörper (11) wenigstens ein Einfüllstutzen (18) zum Einbringen eines Dichtmittels in den Hohlraum (12) und/oder wenigstens ein Fluidentnahmestutzen (20) zur Entnahme eines Fluids aus dem Hohlraum (12) angeordnet ist, wobei insbesondere der Einfüllstutzen (18) und/oder der Fluidentnahmestutzen (20) als Gewindestutzen ausgebildet ist.

7. Leitungsmanschette (10) nach einem der vorhergehenden Ansprüche,
**dadurch gekennzeichnet,**
**dass** an dem Gehäusekörper (11) wenigstens ein Sicherheitsabblaseventil (19) zum Abblasen von Fluid aus dem Hohlraum (12) angeordnet ist, wobei das Sicherheitsabblaseventil (19) dazu ausgebildet ist zu öffnen, wenn ein Druck in dem Hohlraum (12) einen vorgegebenen Grenzwert erreicht oder überschreitet.

8. Verwertungssystem (50), umfassend wenigstens eine Leitungsmanschette (10) nach einem der vorhergehenden Ansprüche sowie wenigstens ein Verwertungsmodul (51) zur Verwertung eines aus dem Hohlraum (12) wenigstens einer Leitungsmanschette (10) entnommenen Fluidstroms (F), wobei wenigstens ein Verwertungsmodul (51) mit dem Hohlraum (12) wenigstens einer Leitungsmanschette (10), insbesondere über einen Fluidentnahmestutzen (20) und/oder ein Sicherheitsabblaseventil (19) der Leitungsmanschette (10), in Fluidverbindung steht.

9. Verwertungssystem (50) nach Anspruch 8,
**dadurch gekennzeichnet,**
**dass** wenigstens ein Verwertungsmodul (51) als ein Speichermodul (51.1), zur, zumindest temporären, Speicherung des Fluidstroms (F) ausgebildet ist, wobei insbesondere das Speichermodul (51.1) wenigstens einen Speichertank zur Aufnahme des Fluidstroms (F) umfasst.

10. Verwertungssystem (50) nach einem der Ansprüche 8 bis 9,
**dadurch gekennzeichnet,**
**dass** wenigstens ein Verwertungsmodul (51) als ein Kompressionsmodul (51.2), zur Kompression des Fluidstroms (F) ausgebildet ist, wobei insbesondere das Kompressionsmodul (51.2) wenigstens einen Kompressor umfasst.

11. Verwertungssystem (50) nach einem der Ansprüche 8 bis 10,
**dadurch gekennzeichnet,**
**dass** wenigstens ein Verwertungsmodul (51) als ein Fackelmodul (51.3) zum, zumindest teilweisen, Abbrennen des Fluidstroms (F) ausgebildet ist.

12. Verwertungssystem (50) nach einem der Ansprüche 8 bis 11,
**dadurch gekennzeichnet,**
**dass** wenigstens ein Verwertungsmodul (51) als ein Brennstoffzellenmodul (51.4) zur Erzeugung elektrischer Energie aus dem Fluidstroms (F) ausgebildet ist und/oder, dass wenigstens ein Verwertungsmodul (51) als ein Pyrolysemodul (51.5) zur thermischen Zersetzung des Fluidstroms (F) ausgebildet ist.

13. Verwertungssystem (50) nach einem der Ansprüche 8 bis 12,
**dadurch gekennzeichnet,**
**dass** wenigstens ein Verwertungsmodul (51) als ein Antriebsmodul (51.6) zur Erzeugung einer mechanischen Antriebsenergie aus dem Fluidstrom (F) ausgebildet ist.

14. Leitungssystem (60), umfassend eine Rohrleitung (61) sowie wenigstens eine wenigstens eine Leitungsmanschette (10) gemäß einem der Ansprüche 1 bis 7, wobei wenigstens ein Rohrleitungsabschnitt (61.1) der Rohrleitung (61) durch wenigstens eine Leitungsmanschette (10) vollständig umfasst ist.

15. Verfahren (100) zur Verwendung einer Leitungsmanschette (10) nach einem der Ansprüche 1 bis 7, umfassend:
- Anordnen (110) der Leitungsmanschette (10) an einer Rohrleitung (61), sodass die Leitungsmanschette (10) einen Rohrleitungsabschnitt (61.1) der Rohrleitung (61) vollständig umfasst.
